# EUROPEAN PATENT APPLICATION

(11) **EP 4 733 124 A1**
(43) Date of publication of application: **29.04.2026**
(21) Application number: 24901745.0
(22) Date of filing: 20.11.2024
(51) Int. Cl.: B60L 53/00, B60L 53/67, B60L 53/60, B60L 53/66

(54) **CHARGING PILE SYSTEM AND POWER SCHEDULING METHOD AND APPARATUS THEREFOR, AND COMPUTER DEVICE**

(30) Priority: 05.09.2024 CN 202411247336
(71) Applicant: Sungrow Charging Technology Co., Ltd., Hefei, Anhui 230088 (CN)
(72) Inventor: CHEN, Shaoqin, Hefei, Anhui 230088 (CN); WANG, Gang, Hefei, Anhui 230088 (CN)
(74) Representative: Rooney, John-Paul
(86) International application number: PCT/CN2024/133160
(87) International publication number: WO 2026/051205

(57) **Abstract**

A charging pile system, a power scheduling method and a power scheduling apparatus for a charging pile system, and a computer device are provided. The method includes: turning on a switch between a first charging gun and a target power module group in a case that the first charging gun is connected to a load, where the target power module group corresponds to a target charging gun different from the first charging gun, and the target charging gun operates in an idle state; and controlling at least one of the multiple target power module groups to provide a charging power to the first charging gun in a case that a required charging power of the first charging gun is greater than an output power of a first power module group. Thus, the target power module group can be controlled to quickly provide power to the first charging gun, thereby improving the speed of responding to charging power requirements and improving the charging efficiency.

## Description

This application claims priority to Chinese Patent Application No.202411247336.8, titled "CHARGING PILE SYSTEM, POWER SCHEDULING METHOD AND APPARATUS FOR CHARGING PILE SYSTEM, AND COMPUTER DEVICE", filed on September 5, 2024 with the China National Intellectual Property Administration, which is incorporated herein by reference in its entirety.

### FIELD

The present disclosure relates to the technical field of charging devices, and in particular to a charging pile system, a power scheduling method and a power scheduling apparatus for a charging pile system, and a computer device.

### BACKGROUND

With the use of electric vehicles, charging pile devices are gradually deployed in many major cities. An input terminal of a charging pile device is connected to an alternating-current power grid, and an output terminal of the charging pile device is arranged with a charging gun for charging electric vehicles. However, with the development of the new energy vehicle technology, the requirement for the efficiency of charging electric vehicles is gradually increasing. Therefore, how to improve charging efficiency is a technical problem to be solved.

### SUMMARY

In view of this, to solve the above technical problem, a charging pile system, a power scheduling method and a power scheduling apparatus for a charging pile system, a computer device, a computer-readable storage medium, and a computer program product are provided, to quickly response to the requirement for charging power and thereby improving the charging efficiency.

In a first aspect, a power scheduling method for a charging pile system is provided according to the present disclosure. The charging pile system includes multiple charging guns and multiple power module groups. The multiple charging guns and the multiple power module groups are connected one-to-one. The method includes: turning on a switch between a first charging gun and a target power module group in a case that the first charging gun is connected to a load, where the target power module group corresponds to a target charging gun different from the first charging gun, and the target charging gun operates in an idle state; and controlling at least one of the multiple target power module groups to provide a charging power to the first charging gun in a case that a required charging power of the first charging gun is greater than an output power of a first power module group.

In an embodiment, after turning on the switch between the first charging gun and the target power module group, the method includes: controlling at least one of the multiple target power module groups to operate in a pre-start state. An output voltage of the target power module group operating in the pre-start state is less than a bus voltage.

In an embodiment, each of the power module groups includes multiple power modules. The controlling at least one of the multiple target power module groups to operate in a pre-start state includes: controlling at least one power module in the at least one of the multiple target power module groups to operate in the pre-start state in a case that a required charging power of the load in a next time period is greater than a required charging power of the load in a current time period. An output voltage of the power module operating in the pre-start state is less than the bus voltage.

In an embodiment, the method includes: acquiring historical charging data and a current charging duration of the load connected to the first charging gun; and predicting the required charging power of the load in the next time period based on the historical charging data and the current charging duration of the load.

In an embodiment, the controlling at least one power module in the at least one of the multiple target power module groups to operate in the pre-start state in a case that a required charging power of the load in a next time period is greater than a required charging power of the load in a current time period includes: determining a first power difference based on the required charging power of the load in the next time period and a total charging power currently provided to the first charging gun; acquiring information of a first target power module based on the first power difference; and controlling the first target power module to operate in the pre-start state.

In an embodiment, the acquiring information of a first target power module based on the first power difference includes: acquiring operating durations of all power modules in the at least one of the multiple target power module groups; and determining the first target power module from the at least one of the multiple target power module groups based on the operating durations of all the power modules.

In an embodiment, the controlling at least one of the multiple target power module groups to provide a charging power to the first charging gun in a case that a required charging power of the first charging gun is greater than an output power of a first power module group includes: regulating an output voltage and an output current of the at least one of the multiple target power module groups that operates in the pre-start state in the case that the required charging power of the first charging gun is greater than the output power of the first power module group, whereby the at least one of the multiple target power module groups that operates in the pre-start state provides the charging power to the first charging gun.

In an embodiment, after turning on the switch between the first charging gun and the target power module group, the method includes: disconnecting the target power module group and the first charging gun in a case that the target charging gun corresponding to the target power module group is started up.

In a second aspect, a charging pile system is provided according to the present disclosure. The charging pile system includes: multiple charging guns and multiple power module groups, a switch device, and a controller. The multiple charging guns and the multiple power module groups are connected one-to-one. The switch device is connected to the multiple charging guns and the multiple power module groups, and the switch device is configured to connect any one of the multiple charging guns and any one of the multiple power module groups. The controller is connected to the multiple charging guns, the multiple power module groups and the switch device. The controller is configured to: turn on a switch between a first charging gun and a target power module group in a case that the first charging gun is connected to a load, where the target power module group corresponds to a target charging gun different from the first charging gun, and the target charging gun operates in an idle state; and control at least one of the multiple target power module groups to provide a charging power to the first charging gun in a case that a required charging power of the first charging gun is greater than an output power of a first power module group.

In a third aspect, a power scheduling apparatus for a charging pile system is provided according to the present disclosure. The apparatus includes a control module. The control module is configured to turn on a switch between a first charging gun and a target power module group in a case that the first charging gun is connected to a load. The target power module group corresponds to a target charging gun different from the first charging gun, and the target charging gun operates in an idle state. The control module is configured to control at least one of the multiple target power module groups to provide a charging power to the first charging gun in a case that a required charging power of the first charging gun is greater than an output power of a first power module group.

In an embodiment, the apparatus includes a regulation module. The regulation module is configured for controlling at least one of the multiple target power module groups to operate in a pre-start state. An output voltage of the target power module group operating in the pre-start state is less than a bus voltage.

In an embodiment, the regulation module includes a determination unit and a switching unit. The determination unit is configured for determining a required charging power of the load connected to the first charging gun in a next time period. The switching unit is configured to control at least one power module in the at least one of the multiple target power module groups to operate in the pre-start state in a case that the required charging power of the load in the next time period is greater than a required charging power of the load in a current time period. An output voltage of the power module operating in the pre-start state is less than the bus voltage.

In an embodiment, the determination unit includes an acquisition subunit and a prediction subunit. The acquisition subunit is configured for acquiring historical charging data and a current charging duration of the load connected to the first charging gun. The prediction subunit is configured for predicting the required charging power of the load in the next time period based on the historical charging data and the current charging duration of the load.

In an embodiment, the switching unit includes: a determination subunit and a switching subunit. The determination subunit is configured for determining a first power difference based on the required charging power of the load in the next time period and a total charging power currently provided to the first charging gun. The determination subunit is configured for acquiring information of a first target power module based on the first power difference. The switching subunit is configured to control the first target power module to operate in the pre-start state.

In an embodiment, the determination subunit is configured for: acquiring operating durations of all power modules in the at least one of the multiple target power module groups; and determining the first target power module from the at least one of the multiple target power module groups based on the operating durations of all the power modules.

In an embodiment, the regulation module is configured to regulate an output voltage and an output current of the at least one of the multiple target power module groups that operates in the pre-start state in the case that the required charging power of the first charging gun is greater than the output power of the first power module group, whereby the at least one of the multiple target power module groups that operates in the pre-start state provides the charging power to the first charging gun.

In an embodiment, the control module is configured to disconnect the target power module group and the first charging gun in a case that the target charging gun corresponding to the target power module group is started up.

In a fourth aspect, a computer device is provided according to the present disclosure. The computer device includes a memory and a processor. The memory stores a computer program. The processor is configured, when executing the computer program, to perform the power scheduling method for a charging pile system described above.

In a fifth aspect, a computer-readable storage medium is provided according to the present disclosure. The computer-readable storage medium stores a computer program. The computer program, when executed by a processor, causes the processor to perform the power scheduling method for a charging pile system described above.

In a sixth aspect, a computer program product is provided according to the present disclosure. The computer program product includes a computer program. The computer program, when executed by a processor, causes the processor to perform the power scheduling method for a charging pile system described above.

According to the charging pile system, the power scheduling method for a charging pile system, the apparatus for a charging pile system, the computer device, the computer-readable storage medium, and the computer program product, a switch between a first charging gun and a target power module group is turned on in a case that the first charging gun is connected to a load, and at least one of the multiple target power module groups is controlled to provide a charging power to the first charging gun in a case that a required charging power of the first charging gun is greater than an output power of a first power module group. The target power module group corresponds to a target charging gun different from the first charging gun, and the target charging gun operates in an idle state. Since the first charging gun and the target power module group corresponding to the target charging gun operating in the idle state are connected when the first charging gun operates in an operation state or is to operate in the operation state, the target power module group is occupied. Therefore, in a case that the required charging power of the first charging gun is greater than the output power of the first power module group, the target power module group can be quickly controlled to provide a charging power to the first charging gun, thereby improving the speed of responding to charging power requirements and improving the charging efficiency.

### BRIEF DESCRIPTION OF THE DRAWINGS

**In** order to more clearly describe the technical solutions in the embodiments of the present disclosure or the technical solutions in the conventional technology, drawings to be used in the description of the embodiments of the present disclosure or the conventional technology are briefly described hereinafter. It is apparent that the drawings described below are merely used for describing the embodiments of the present disclosure, and those skilled in the art may obtain other drawings according to the provided drawings without any creative effort.
FIG. 1 is a flowchart of a power scheduling method for a charging pile system according to an embodiment;
FIG. 2 is a flowchart of a power scheduling method for a charging pile system according to another embodiment;
FIG. 3 is a flowchart of a power scheduling method for a charging pile system according to another embodiment;
FIG. 4 is a flowchart of a power scheduling method for a charging pile system according to another embodiment;
FIG. 5 is a flowchart of a power scheduling method for a charging pile system according to another embodiment;
FIG. 6 is a flowchart of a power scheduling method for a charging pile system according to another embodiment;
FIG. 7 is a schematic structural diagram of a charging pile system according to an embodiment;
FIG. 8 is a schematic structural diagram of a charging pile system according to another embodiment;
FIG. 9 is a schematic structural diagram of a power scheduling apparatus for a charging pile system according to an embodiment;
FIG. 10 is a schematic structural diagram of a power scheduling apparatus for a charging pile system according to another embodiment;
FIG. 11 is a schematic structural diagram of a power scheduling apparatus for a charging pile system according to another embodiment;
FIG. 12 is a schematic structural diagram of a power scheduling apparatus for a charging pile system according to another embodiment;
FIG. 13 is a schematic structural diagram of a power scheduling apparatus for a charging pile system according another embodiment; and
FIG. 14 is a schematic diagram showing an internal structure of a computer device according to an embodiment.

Reference numerals are listed as follows:

| | | | |
|---|---|---|---|
| 10 | Charging gun | 20 | Power module group |
| 30 | Switch device | 21 | Power module |

### DETAILED DESCRIPTION

In order to facilitate understanding the present disclosure, the present disclosure is described comprehensively below with reference to the accompanying drawings. Embodiments of the present disclosure are illustrated in the drawings. However, the present disclosure may be implemented in many different forms and is not limited to the embodiments described herein. The embodiments are provided to make the present disclosure more thorough and comprehensive.

Unless otherwise defined, all technical and scientific terms used herein have the same meaning as commonly understood by those skilled in the art to which the present application belongs. The terms used in the specification of the present application are merely intended for describing specific embodiments, and are not intended to limit the present application.

It should be understood that the terms "first," "second," and the like used in the present disclosure may be used to describe various components and the components are not limited by the terms. The terms are used merely to distinguish a first component from another component.

It should be noted that when a component is considered to be "connected" to another component, the component may be directly connected to another component or connected to another component via an intermediate component. In addition, the term "connection" in the following embodiments should be understood as "electrical connection", "communication connection" and the like if electrical signals or data is transmitted between the connected objects.

As used herein, the singular forms of "a", "an", "one" and "the" may also include plural forms, unless the context clearly dictates otherwise. It should be further understood that the terms "include/comprise", "having", and the like specify the existence of a described feature, entirety, step, operation, component, portion, or combinations thereof, and do not exclude the possibility of the existence or addition of one or more other features, entirety, steps, operations, components, portions, or combinations thereof.

In related technologies, an integrated one-machine-dual-gun direct-current charging pile is provided to improve charging efficiency. The charging pile includes two charging guns and two groups of power modules. The two charging guns may perform charging simultaneously, or only one of the charging guns performs charging. In a case that only one of the charging guns performs charging, the charging gun may occupy the two groups of power modules. In a case that the two charging guns perform charging simultaneously, each of the two charging guns occupies one group of power modules. However, for the integrated one-machine-dual-gun direct-current charging pile according to the related technologies, in the case that only one of the charging guns performs charging, only when a required charging power of the charging gun exceeds an output power of the group of power modules connected to the charging gun, a branch switch of the other group of power modules is triggered to be turned on, so that the other group of power modules is connected to the charging gun. In this way, the other group of power modules may be adopted only after turning-on switch, boosting and starting up, resulting a long adopting time and low charging efficiency.

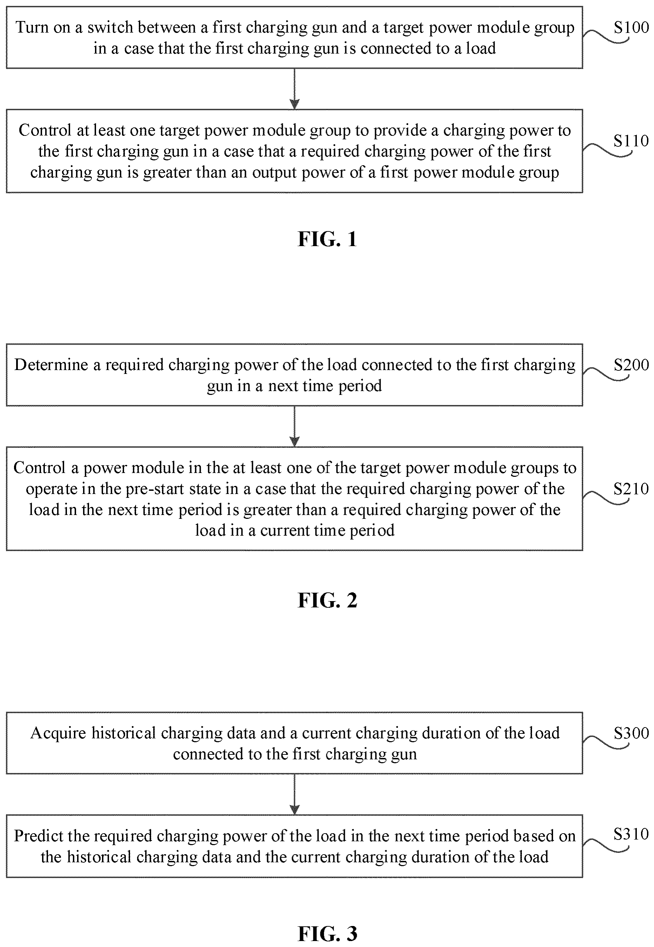

In an embodiment, as shown in FIG. 1, a power scheduling method for a charging pile system is provided. The charging pile system includes multiple charging guns and multiple power module groups. The multiple charging guns and the multiple power module groups are connected one-to-one. A first charging gun is one of the multiple charging guns, and the first charging gun corresponds to a first power module group. The method includes the following steps S100 and S110.

In step S100, in a case that the first charging gun is connected to a load, a switch between the first charging gun and a target power module group is turned on. It should be understood that a power modules group may include multiple power modules. In a case that the first charging gun is connected to a load (such as an electric vehicle), the first power module group corresponding to the first charging gun may provide a charging power to the first charging gun, or the first power module group may operate in a communication stage and does not provide a charging power to the first charging gun.

Although the switch between the first charging gun and the target power module group is turned on, the target power module group does not immediately supply power to the first charging gun.

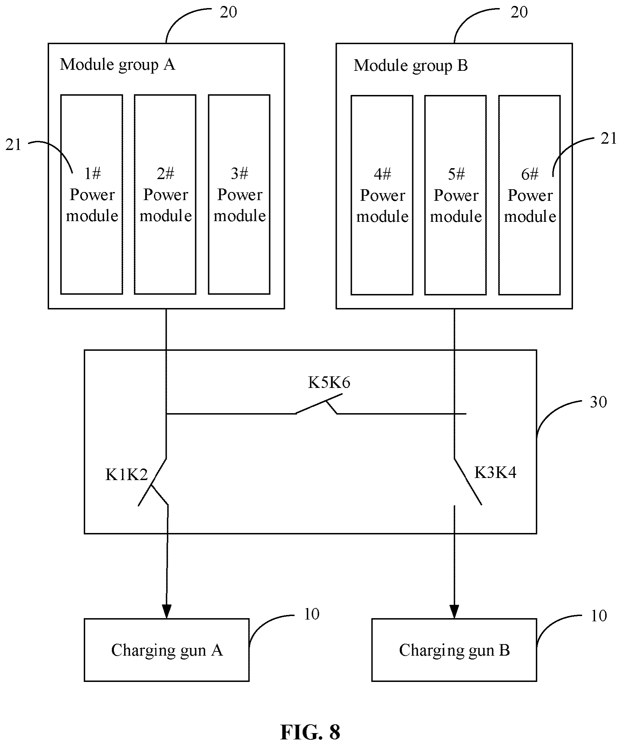

It should be understood that in a case that a branch voltage of the target power module group does not reach a bus voltage, the target power module group cannot supply power to the first charging gun. Only in a case that the branch voltage of the target power module group is greater than the bus voltage, the target power module group can supply power to the first charging gun. It should be understood that the bus voltage is a voltage of a path on which the power module group directly connected to the charging gun is located. As shown in FIG. 8, a voltage of a path between a charging gun A and a module group A (module group A→K1K2→charging gun A) is a bus voltage, and a voltage of a path, on which a module group B is connected to a bus via K5K6 (module group B→K5K6), is a branch voltage. Therefore, the switch on the path between the first charging gun and the target power module group may be turned on, and the voltage of the branch on which the target power module group is located may be controlled not to exceed the bus voltage. In this way, the target power module group operates in a state in which the target power module group may be quickly boosted to the bus voltage at any time for power supply, for quickly supplying power to the first charging gun when required.

It should be understood that in the charging pile system, although different charging guns correspond to different power module groups, in a case of a high charging requirement of a load, a power module group corresponding to another charging gun may be used for a current charging gun to meet the charging requirement of the load. The target power module group may be understood as a power module group corresponding to a charging gun that is not the first charging gun in the charging pile system, and the target charging gun operates in an idle state. Since the target power module group corresponding to the target charging gun temporarily operates in the idle state, a switch between the target power module group and the first charging gun may be turned on, so that the target power module group may serve as a backup power module group for the first charging gun. The first charging gun is a charging gun that is to operate in an operation state. For a charging gun operating in an operation state, the charging gun is connected to a load and is supplying power to the load, that is, a power module group is providing a charging power to the charging gun. The first charging gun operating in the operation state indicates that the first charging gun is connected to a load and is supplying power to the load, that is, the first power module group is providing a charging power to the first charging gun.

In an embodiment, in a case that the first power module group corresponding to first charging gun provides a charging power to the first charging gun, all power module groups operating in the idle state may serve as target power module groups and all switches between the target power module groups and the first charging gun may be turned on, or only a part of the power module groups operating in the idle state serve as target power module groups and switches between the part of the target power module groups and the first charging gun may be turned on.

It should be understood that turning on the switch between the first charging gun and a target power module group indicates turning on a power distribution contactor between the first charging gun and the target power module group, so that the first charging gun may receive the power provided by the target power module group.

In step S110, in a case that a required charging power of the first charging gun is greater than an output power of a first power module group, at least one of the target power module groups is controlled to provide a charging power to the first charging gun.

The required charging power of the first charging gun is a currently required power of the load connected to the first charging gun. In a case that the required power of the load connected to the first charging gun is greater than the output power of the first power module group corresponding to the first charging gun, it indicates that the total charging power that the first power module group can supply is insufficient to meet the charging requirement of the load, and it is required to adopt another power module group to supply power to the first charging gun, thereby increasing the output power of the first charging gun and meeting the charging requirement of the load. Therefore, at least one of the target power module groups is controlled to provide the charging power to the first charging gun.

It should be understood that in the case that the branch voltage of the target power module group does not reach the bus voltage, the branch voltage is lower than the bus voltage, that is, the electrical potential of the branch where the target power module group is located is lower than the electrical potential of the bus, so a current flowing from the target power module group to the bus cannot be generated and the target power module group cannot supply power to the first charging gun. Therefore, the operation of controlling at least one of the target power module groups to provide the charging power to the first charging gun may be understood as regulating a branch voltage of the at least one of the target power module groups. Thus, the branch voltage is controlled to reach the bus voltage. In this way, the target power module group may provide the charging power to the first charging gun, thereby increasing the output power of the first charging gun.

According to the embodiments of the present disclosure, the power module groups are scheduled in a charging request stage, that is, when the first charging gun is started, the switch between the first charging gun and the target power module group is turned on. Since the target power module group and the first charging gun have been connected to each other in advance, the response speed of the target power module group for providing the charging power to the first charging gun is improved. Compared to the method of turning on the switch between the first charging gun and the target power module group on detecting that a power requirement of a vehicle cannot be met during a charging process, with the method in the present disclosure, the time for performing connection is reduced, and the response speed to power requirements is improved.

In an embodiment, after the step S100 in which the switch between the first charging gun and the target power module group is turned on in the case that the first charging gun is connected to the load, the power scheduling method for a charging pile system includes: controlling at least one of the target power module groups to operate in a pre-start state.

It should be understood that an output voltage of the target power module group operating in the pre-start state is less than the bus voltage. Since the output voltage of the target power module group is lower than the bus voltage, a potential at an output terminal of the target power module group is lower than a potential of the bus, and the current flowing from the target power module group to the bus cannot be generated.

For example, the output voltage of the target power module group operating in the pre-start state may be determined as the bus voltage minus 5V.

In the embodiment, at least one of the target power module groups is controlled to operate in the pre-start state, so that the output voltage of the target power module group can be boosted without starting from 0 and be boosted to the bus voltage quickly to output power quickly, thereby improving the speed of responding to charging power requirements and improving the charging efficiency.

In an embodiment, as shown in FIG. 2, the at least one of the target power module groups is controlled to operate in the pre-start state by performing the following steps S200 and S210.

In step S200, a required charging power of the load connected to the first charging gun in a next time period is determined.

It should be understood that the required charging power of the load connected to the first charging gun is not constant, and varies over time. At the beginning of charging process, the required charging power of the load is low, and the total power of the current corresponding first power module group meets the charging requirement of the load. However, as the charging time increases, the required charging power of the load increases, the total power of the current corresponding first power module group does not meet the charging requirement of the load, and it is required to adopt other power module group (that is, the target power module groups) to provide the charging power to the first charging gun. Therefore, it is required to predict a required charging power of the load in a next time period, and then determine when the at least one of the target power module groups is controlled to operate in the pre-start state.

The time period may be configured in advance. For example, a time period may be configured as 10 minutes, and a time period from starting charging a load to charging the load until the tenth minute may be determined as a first time period of charging. A required charging power of the load in a next time period may be determined at any time within a current time period. Still with the above example, the required charging power in the next time period (that is, a second time period) may be determined at the ninth minute of the charging process.

In step S210, in a case that the required charging power of the load in the next time period is greater than the required charging power of the load in the current time period, a power module in the at least one of the target power module groups is controlled to operate in the pre-start state.

In a case that it is determined that the required charging power of the load in the next time period is greater than the required charging power of the load in the current time period, the total output power of the first charging gun in the next time period may be insufficient to meet the charging requirement of the load in the next time period. For example, the first charging gun is currently provided with a total charging power of 40kW by the first power module group corresponding to the first charging gun, and it is determined that the required charging power of the load in the next time period is 60kW, that is, the required charging power of the load in the next time period is greater than 40kW, and thus the first power module group currently providing the charging power to the first charging gun cannot meet the charging requirement of 60kW. In this case, it is required to control at least one of the target power module groups connected to the first charging gun to operate in the pre-start state, so that when the required charging power of the load is greater than the current total output power of the first charging gun, the power modules operating in the pre-start state can be quickly adopted to provide the charging power to the first charging gun.

It should be understood that since a power module group may include multiple power modules, the operation of controlling the target power module group to operate in the pre-start state may be understood as controlling at least one power module in the target power module group to operate in the pre-start state. For example, in a case that a target power module group includes multiple power modules and the charging requirement of the load in the next time period can be met by adopting only one of the power modules, the only one of the power modules may be controlled to operate in the pre-start state while the other power modules operate in the idle state.

In the embodiments, the required charging power of the load in the next time period is predicted, and at least one power module in the at least one of the target power module groups is controlled to operate in the pre-start state in advance in the case of determining that the required charging power of the load in the next time period is greater than the required charging power of the load in the current time period, so that the power module operating in the pre-start state may be quickly adopted to provide a charging power to the first charging gun to meet the charging requirement of the load, thereby improving the speed of responding to the power requirement of the load and improving the charging efficiency of the charging pile for the load.

In an embodiment, as shown in FIG. 3, the operation of determining the required charging power of the load connected to the first charging gun in the next time period in step S200 includes the following steps S300 and S310.

In step S300, historical charging data and a current charging duration of the load connected to the first charging gun are acquired.

It should be understood that parameter information of the load connected to the first charging gun may be acquired, and the required charging power of the load connected to the first charging gun may be determined based on the parameter information of the load.

In an embodiment, a charging pile may acquire parameter information of a vehicle, such as a VIN (Vehicle Identification Number) code of the vehicle, that is, a national standard code, or an EvID/Mac address of the vehicle, that is, an European standard code. Based on the parameter information, basic information (including at least one of the manufacturer, year, model, body type and code, engine code, and assembly position) of the vehicle may be determined.

In an embodiment, the parameter information of the load may include a State of Charge (SOC) value of a battery. The SOC value may indicate remaining capacity of the battery. The SOC value is 0 in a case that the battery is fully discharged, and the SOC value is 1 in a case that the battery is fully charged. Generally, the SOC value ranges from 0 to 100%.

In an embodiment, the historical charging data of the load is obtained based on the parameter information of the load.

For example, in a case that the parameter information includes the vehicle identification number or an identification address, basic information of the vehicle may be determined. Then, the historical charging data of the vehicle may be acquired based on of the basic information. Specifically, historical charging data of the vehicle may be acquired, or historical charging data of the vehicle corresponding to the basic information may be acquired. For example, after determining the load being an A-model vehicle of a brand A, only historical charging data of this vehicle may be acquired, or historical charging data corresponding to multiple A-model vehicles of the brand A may be acquired. Specifically, the historical charging data may be acquired from a cloud server of the brand A.

For example, in a case that the parameter information includes a SOC value of a battery, data of charging powers corresponding to different SOC values in historical charging processes of the vehicle may be acquired.

In step S310, the required charging power of the load in the next time period is predicted based on the historical charging data and the current charging duration of the load.

It should be understood that the required charging power of the load is related to the charging duration or the SOC value of the load.

It should be understood that vehicles with different basic information have different changes in the required power during charging processes. For example, historical charging data of the A-model vehicles indicates that the required charging power usually reaches a maximum 5 minutes after starting a charging process, reaching a maximum charging power of the A-model vehicles; and historical charging data of a B-model vehicles indicates that the required charging power usually reaches a maximum 15 minutes after starting a charging process, reaching a maximum charging power of the B-model vehicles. Therefore, it is required to predict a required charging power of a current load in a next time period based on historical charging data of a vehicle and a current charging duration of the current load.

It should be understood that there is usually a correspondence between charging powers and SOC values of a battery. For example, in a case of a SOC value below a threshold (such as 80%), a high charging power (such as 300KW) is provided to the battery, improving the charging speed of the battery. In a case of a SOC value above a threshold (such as 80%), a low charging power (such as 100 KW) may be provided to protect the battery. In a case of a SOC value approaching 100%, the battery may be charged in a trickle-charging mode, and a lowest charging power (such as 5 KW) is provided. Therefore, it is required to predict a required charging power of a current load in a next time period based on historical charging data of a vehicle and a current SOC value of the load.

In an embodiment of the present disclosure, a total charging duration of the load may be divided into multiple time periods based on the historical charging data of the load. The total charging duration of the load may be directly acquired based on the historical charging data of the load. For example, in a case that an average charging duration of the load in historical ten charging processes is 2 hours or an average charging duration of a vehicle model corresponding to the load in historical ten charging processes is 2 hours, the total charging duration of the load may be determined as 2 hours. The time period may be configured in advance. For example, a time period may be configured as 10 minutes, and a time period from starting charging a load to charging the load until the tenth minute may be determined as a first time period of charging. Then, based on a current charging duration of the load, it may be determined which time period the load is currently in for charging. For example, in a case that the current charging duration of the load is 5 minutes after starting a charging process, the load is currently in the first time period. Based on the historical charging data of the load, the required charging power of the load in each of time periods may further be acquired. Therefore, the required charging power of the load in the next time period may be predicted based on the current charging duration of the load. For example, based on the historical charging data of the load, it may be acquired that the required charging power of the load in the first time period (from 0 to the 10th minute) is 100KW and the required charging power of the load in the second time period (from the 10^{th} minute to the 20th minute) is 200KW. In the case that the current charging duration of the load is 5 minutes after starting the charging process, the required charging power of the load in the next time period may be determined as 200KW.

In an embodiment, historical charging experience data of the load may be queried based on the parameter information of the load, and then a power requirement curve of the load may be fitted based on the historical charging experience data of the load. Specifically, for the power requirement curve, the horizontal axis may represent time instants or SOC values, and the vertical axis may represent required charging powers. Therefore, a required charging power of a charging gun in a next time period may be quickly obtained using a power requirement curve based on a current SOC value and a current charging duration of a load.

According to the embodiments, the parameter information of the load may be acquired, and the historical charging data of the load may be determined based on the parameter information of the load, and then the required charging power of the load in the next time period may be predicted based on the historical charging data and the current charging duration of the load. Thus, the required charging power of the load is predicted, and at least one power module in the at least one of the target power module groups is controlled to operate in the pre-start state in advance, so that the power module operating in the pre-start state can be quickly adopted to meet the charging requirement of the load.

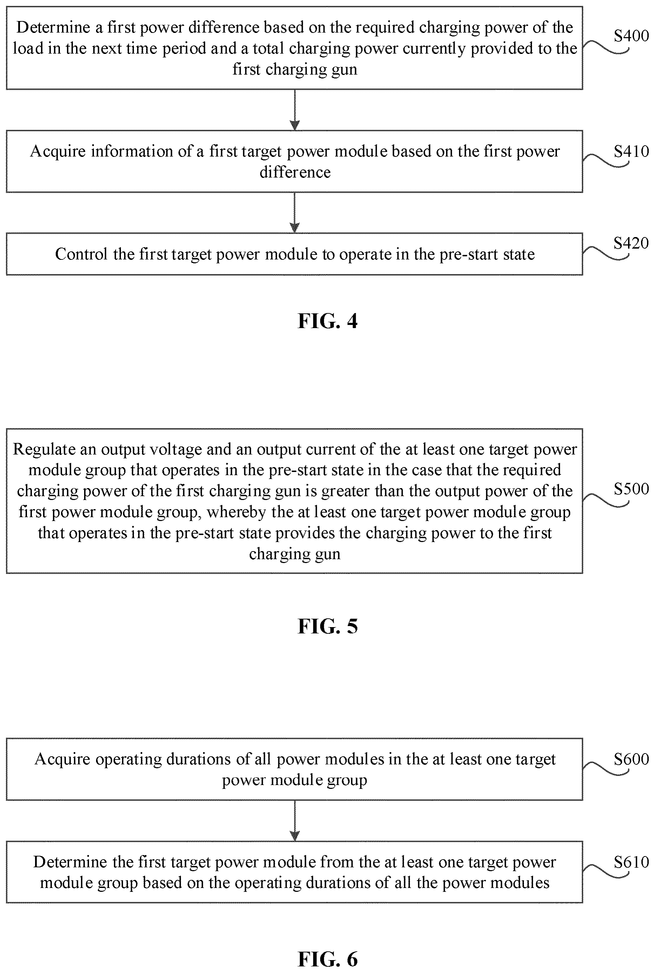

In an embodiment, as shown in FIG. 4, the operation of controlling at least one power module in the at least one of the target power module groups to operate in the pre-start state in the case that the required charging power of the load in the next time period is greater than the required charging power of the load in the current time period in the step S210 includes the following steps S400 to S420.

In step S400, a first power difference is determined based on the required charging power of the load in the next time period and a total charging power currently provided to the first charging gun.

It should be understood that the total charging power currently provided to the first charging gun is the power currently provided to the first charging gun by the first power module group corresponding to first charging gun. The required charging power of the load in the next time period is the predicted required charging power of the load in the next time period described in the above embodiments. Then, a first power difference may be determined based on a difference between the required charging power of the load in the next time period and the total charging power currently provided to the first charging gun. For example, in a case that the first charging gun is currently provided with a total power of 40kW by the first power module group corresponding to the first charging gun and the required charging power of the load in the next time period is determined as 60kW, the first power difference may be calculated as: 60kW-40kW=20kW.

In step S410, information of a first target power module is acquired based on the first power difference.

It should be understood that in a case that all power modules in a target power module group have a same specification, the number of required power modules may be determined based on the first power difference. That is, based on the first power difference, it may be determined how many power modules are required to meet the first power difference. For example, it is determined that the first power difference is 50kW. In a case that all power modules in the target power module group have the same specification and a maximum output power of each of the power modules is 30kW, two power modules are required to provide power to the requirement for the first power difference. Any two of the power modules may serve as the first target power module.

In a case that the target power module group includes multiple power modules and at least two power modules in the target power module group have different specifications, for example, a maximum output power of a power module is 50kW and a maximum output power of another power module is 30kW, it is required to determine which power modules to serve as first target power modules based on the actually required power, ensuring that a sum of powers of selected first target power modules is greater than the first power difference. For example, in a case that the first power difference is determined to be 100kW and the target power module group includes three power modules respectively having a maximum output power of 20kW, 100kW and 150kW, the first target power module may be the power module having the maximum output power of 150kW, or the first target power module may include the power module having the maximum output power of 20kW and the power module having the maximum output power of 100kW. Apparently, in a case that there are multiple combinations of power modules meeting the first power difference, a solution with fewer power modules is preferred.

In step S420, the first target power module is controlled to operate in the pre-start state.

It should be understood that after the first target power module is determined, the first target power module is controlled to operate in the pre-start state. The pre-start state is described in the above embodiments and is not repeated herein.

According to the embodiments, the first target power module is determined based on the first power difference to meet the first power difference, then the required first target power module is controlled to operate in the pre-start state, ensuring that the output power meets the charging requirement while other power modules remain in the idle state, thereby improving the service life of the power module groups.

In an embodiment, as shown in FIG. 5, the operation of controlling at least one of the target power module groups to provide the charging power to the first charging gun in the case that the required charging power of the first charging gun is greater than the output power of the first power module group in the step S110 includes the following step S500.

In step S500, in the case that the required charging power of the first charging gun is greater than the output power of the first power module group, an output voltage and an output current of the at least one of the target power module groups that operates in the pre-start state are regulated, so that the at least one of the target power module groups that operates in the pre-start state provides the charging power to the first charging gun.

An output voltage and an output current of a power module operating in the operation state may be calculated based on an actual power requirement. The output voltage and the output current of the at least one of the target power module groups that operates in the pre-start state are respectively regulated to the calculated voltage and current.

It should be understood that a target power module, after regulating an output voltage of the target power module to be greater than or equal to a bus voltage, may supply power to the first charging gun. An output current of the target power module may be regulated based on the actual power requirement. Specifically, the output voltage of the target power module may be regulated to be greater than or equal to a required voltage for vehicle charging. The required voltage for vehicle charging is greater than the bus voltage.

In an embodiment, the output current of the power module operating in the pre-start state may be a pre-determined minimum output current. In a case that the output current of the power module is the pre-determined minimum output current, the power module has lowest power consumption, minimizing the power consumption of the power module operating in the pre-start state and thereby reducing energy loss.

According to the embodiments, in the case that the required charging power of the load in the current time period is greater than the total charging power currently provided to the first charging gun, the target power module is switched from the pre-start state to the operation state, thereby providing the required charging power and performing fast power output.

In an embodiment, as shown in FIG. 6, the operation of acquiring the information of the first target power module based on the first power difference in the step S410 may include the following steps S600 and S610.

In step S600, operating durations of all power modules in the at least one of the target power module groups are acquired.

It should be understood that an operating duration of each of power modules in a target power module group may be recorded. The operating duration may be understood as a cumulative operating duration of a power module, or may be understood as a total operating duration of the power module in a time period. Information about operating durations of all the power modules is stored for querying and sorting.

In step S610, the first target power module is determined from the at least one of the target power module groups based on the operating durations of all the power modules.

It should be understood that the multiple power modules in the target power module group may be sorted an ascending order based on the operating durations of the power modules, and then based on the required first power difference, a power module meeting the first power difference is selecting from the power modules in the ascending order as the first target power module. For example, in a case that a target power module group includes M power modules all of which have a same specification and it is required to determine n power modules as the first target power module to meet the first power difference, n power modules having relatively short operating durations are selected from the M power modules sorted based on the operating durations of the M power modules as the first target power module.

It should be understood that n represents an integer greater than or equal to 1, and a power module having a shorter operating duration is to be adopted with a higher priority. Generally, power modules with shorter operating durations have longer service lives. Therefore, the power modules with shorter operating durations are preferentially adopted, thereby balancing the service lives of the power modules and extending the overall service life of the power module group.

According to the embodiments, the power modules in the target power module group are sorted based on the operating durations of all the power modules in the target power module group, and the power modules with relatively short operating durations are preferentially selected to supply charging power, thereby balancing the service lives of the power modules and extending the overall service life of the target power module group.

It should be understood that the adopted first target power module is controlled to operate in the pre-start state, and other power modules that are not adopted may remain in the idle state (such as in a shutdown state or a sleep state).

In an embodiment, a power module having an output power ranging from 50% to 80% operates in an optimal operation state, based on which n may be determined, thereby ensuring that all started power modules operate in the optimal operation state. For example, a current first power difference is 50kW and all power modules have a same specification and a same maximum output power of 30kW, so an output power of a power modules operating in an optimal operation state ranges from 15W to 24W. Therefore, to meet the first power difference and ensure the power modules operating in the optimal operation state, n is determined to be 3. That is, three power modules with output powers ranging from 15W to 24W are required for meeting the first power difference and ensuring the three power modules operating in the optimal operation state.

According to the embodiments, the optimal operation states of all the power modules are considered, and the powers provided by the power modules operating in the optimal operation state are determined, and then the first target power modules are determined, thereby ensuring that all the first target power modules operate in the optimal operation state and reducing the losses of the power modules.

In an embodiment, after the operation of turning on the switch between the first charging gun and the target power module group in the step S100, the power scheduling method for a charging pile system includes: disconnecting the target power module group and the first charging gun in a case that the target charging gun corresponding to the target power module group is initialized.

It should be understood that in a case that a target charging gun is to be initialized, it is required to determine whether a target power module group corresponding to the target charging gun is operating. If the target power module group is operating, that is, the first charging gun is adopting the target power module group, the target power module group is turned off firstly. After the target power module group stops operating, a switch between the target power module group and the first target charging gun is turned off.

It should be understood that in a case that a target charging gun corresponding to a target power module group is initialized, the target charging gun is to adopt the target power module group to supply power to a load connected to the target charging gun. However, if the target power module group has been adopted by the first charging gun, the target charging gun cannot adopt the corresponding power module group. Therefore, it is required to turn off the target power module group to stop providing power to the first charging gun.

That a charging gun is started may be considered as: a case of obtaining information about the charging gun by a load after the charging gun is connected to the load, or a case of supplying power to a load by the charging gun, or a case of taking the charging gun from a charging pile. The above cases are merely some cases of the present specification, and there are many other cases. According to the embodiments, in the case that the target charging gun corresponding to the target power module group is started up, the target power module group and the first charging gun is disconnected, so that the target power module group may supply power to a target charging gun corresponding to the target power module group, thereby multiple charging guns simultaneously performing charging.

It should be understood that although steps in the flowcharts of FIG. 1 to FIG. 6 are shown sequentially as indicated by arrows, the steps are not necessarily performed sequentially in the order indicated by the arrows. Unless explicitly stated herein, execution of the steps is not restricted in a specific order, and the steps may be executed in another order. Furthermore, at least some of the steps in FIG. 1 to FIG. 6 may include multiple substeps or stages that are not necessarily completed at the same time, and may be executed at different time instants. The substeps or stages are not necessarily executed sequentially, and may be executed in turn or alternately with other steps or at least some of substeps or stages in other steps.

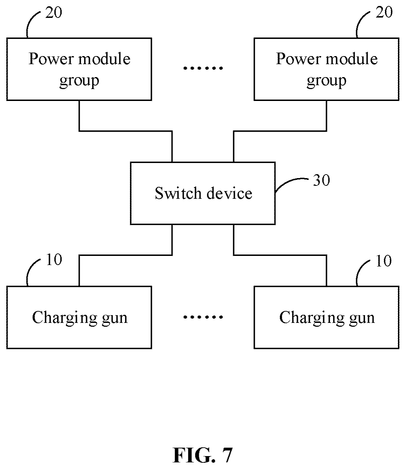

In an embodiment, as shown in FIG. 7, a charging pile system is provided. The charging pile system includes: multiple charging guns 10, multiple power module groups 20, a switch device 30, and a controller (not shown in FIG. 7).

The multiple charging guns 10 and the multiple power module groups 20 are connected one-to-one.

The switch device 30 is connected to the multiple charging guns 10 and the multiple power module groups 20, and is configured for connecting any one of the multiple charging guns 10 and any one of the multiple power module groups 20.

The controller (not shown in FIG.7 and connected to all modules) is connected to the multiple charging guns 10, the multiple power module groups 20, and the switch device 30. The controller is configured for controlling the switch device 30 to turn on a switch between a first charging gun 10 and a target power module group 20 in a case that the first charging gun 10 is connected to a load. The controller is configured for controlling at least one of the multiple target power module groups 20 to provide a charging power to the first charging gun 10 in a case that a required charging power of the first charging gun 10 is greater than an output power of a first power module group 20.

The target power module group 20 corresponds to a target charging gun 10 different from the first charging gun 10, and the target charging gun 10 operates in an idle state.

For example, as shown in FIG. 8, a power module group 20 may include multiple power modules 21 (such as three power modules 21), and a switch device 30 may include switches K1K2, K3K4 and K5K6. In a case of turning on the switch K1K2, multiple power modules 21 in a power module group A may be adopted to provide power to a charging gun A. In a case of turning on the switch K3K4, multiple power modules 21 in a power module group B may be adopted to provide power to a charging gun B. In a case of turning on the switch K1K2 and the switch K5K6 and turning off the switch K3K4, multiple power modules 21 in the power module group A and in the power module group B may be adopted to provide power to the charging gun A. In a case of turning on the switch K3K4 and the switch K5K6 and turning off the switch K1K2, multiple power modules 21 in the power module group A and in the power module group B may be adopted to provide power to the charging gun B.

According to the embodiments, the controller is configured, a switch between a first charging gun and a target power module group is turned on in a case that the first charging gun is connected to a load, and at least one of the multiple target power module groups is controlled to provide a charging power to the first charging gun in a case that a required charging power of the first charging gun is greater than an output power of a first power module group. The target power module group corresponds to a target charging gun different from the first charging gun, and the target charging gun operates in an idle state. Since the first charging gun and the target power module group corresponding to the target charging gun operating in the idle state are connected when the first charging gun operates in an operation state or is to operate in the operation state, the target power module group is occupied. Therefore, in a case that the required charging power of the first charging gun is greater than the output power of the first power module group, the target power module group can be quickly controlled to provide a charging power to the first charging gun, thereby improving the speed of responding to charging power requirements and improving the charging efficiency.

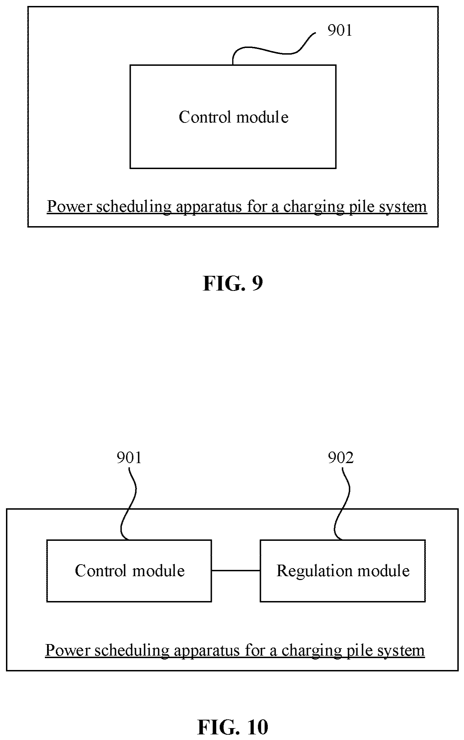

In an embodiment, as shown in FIG. 9, a power scheduling apparatus for a charging pile system is provided. The power scheduling apparatus includes a control module 901.

The control module 901 is configured to turn on a switch between a first charging gun and a target power module group in a case that the first charging gun is connected to a load. The target power module group corresponds to a target charging gun different from the first charging gun, and the target charging gun operates in an idle state.

The control module 901 is configured to control at least one of the multiple target power module groups to provide a charging power to the first charging gun in a case that a required charging power of the first charging gun is greater than an output power of a first power module group.

In an embodiment, as shown in FIG. 10, the power scheduling apparatus includes a regulation module 902.

The regulation module 902 is configured for controlling at least one of the multiple target power module groups to operate in a pre-start state. An output voltage of the target power module group operating in the pre-start state is less than a bus voltage.

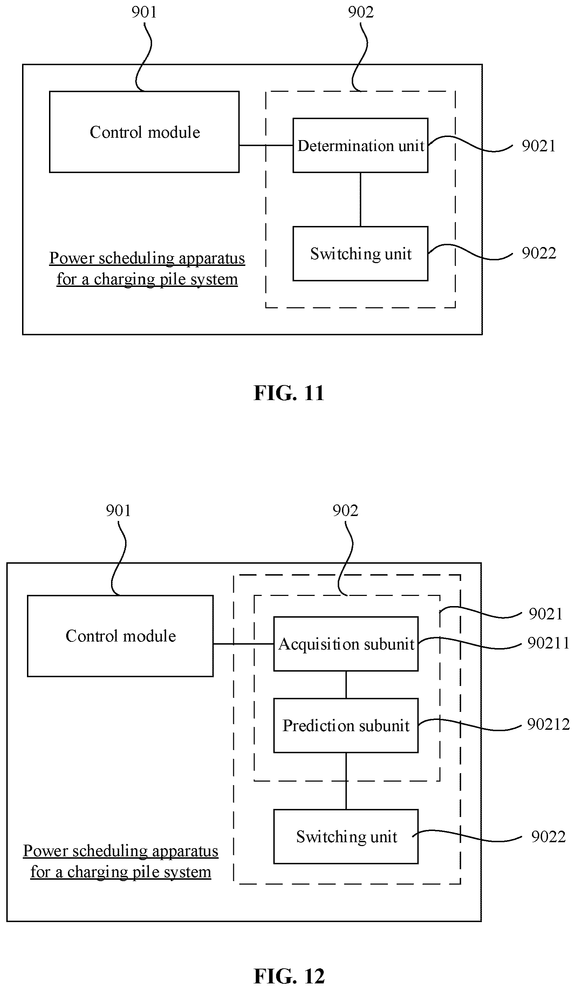

In an embodiment, as shown in FIG. 11, the regulation module 902 includes a determination unit 9021 and a switching unit 9022.

The determination unit 9021 is configured for determining a required charging power of the load connected to the first charging gun in a next time period.

The switching unit 9022 is configured to control a power module in the at least one of the multiple target power module groups to operate in the pre-start state in a case that the required charging power of the load in the next time period is greater than a required charging power of the load in a current time period, An output voltage of the power module operating in the pre-start state is less than the bus voltage.

In an embodiment, as shown in FIG. 12, the determination unit 9021 includes an acquisition subunit 90211 and a prediction subunit 90212.

The acquisition subunit 90211 is configured for acquiring historical charging data and a current charging duration of the load connected to the first charging gun.

The prediction subunit 90212 is configured for predicting the required charging power of the load in the next time period based on the historical charging data and the current charging duration of the load.

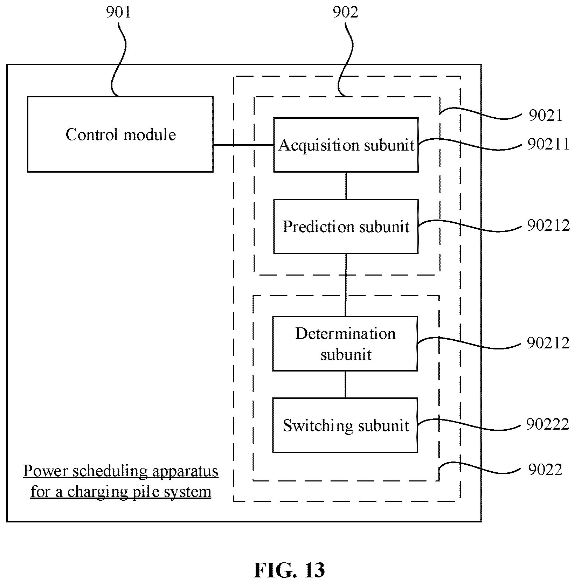

In an embodiment, as shown in FIG. 13, the switching unit 9022 includes a determination subunit 90221 and a switching subunit 90222.

The determination subunit 90221 is configured for determining a first power difference based on the required charging power of the load in the next time period and a total charging power currently provided to the first charging gun.

The determination subunit 90221 is configured for acquiring information of a first target power module based on the first power difference.

The switching subunit 90222 is configured to control the first target power module to operate in the pre-start state.

In an embodiment, the determination subunit 90221 is configured for: acquiring operating durations of all power modules in the at least one of the multiple target power module groups; and determining the first target power module from the at least one of the multiple target power module groups based on the operating durations of all the power modules.

In an embodiment, the regulation module 902 is configured to regulate an output voltage and an output current of the at least one of the multiple target power module groups that operates in the pre-start state in the case that the required charging power of the first charging gun is greater than the output power of the first power module group, whereby the at least one of the multiple target power module groups that operates in the pre-start state provides the charging power to the first charging gun.

In an embodiment, the control module 901 is configured to disconnect the target power module group and the first charging gun in a case that the target charging gun corresponding to the target power module group is started up.

Specific limitations of the power scheduling apparatus for a charging pile system may refer to the limitations of the power scheduling method for a charging pile system described above, and are not repeated herein. The modules in the power scheduling apparatus for a charging pile system may be fully or partially implemented by software, hardware, and a combination thereof. The modules may be, in a hardware form, embedded in or independent of a processor in a computer device, or may be, in a software form, stored in a memory in the computer device, so that the processor may perform corresponding operations of the modules. It should be noted that the division of modules in the embodiments of the present disclosure is schematic and is only a logical function division. In actual implementations, the modules may be divided in other ways.

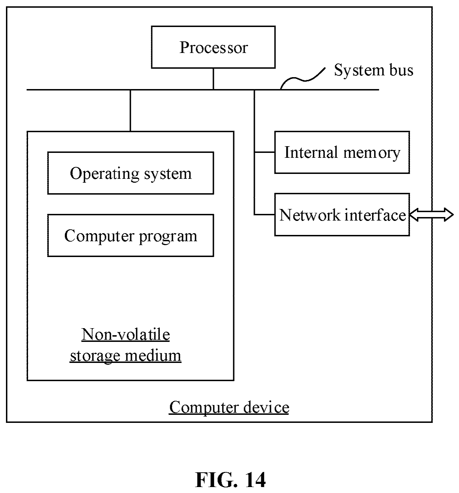

In an embodiment, a computer device is provided. FIG. 14 shows a schematic diagram of an internal structure of the computer device. The computer device includes a processor, a memory and a network interface which are connected via a system bus. The processor of the computer device is configured for providing computing and control capabilities. The memory of the computer device includes a non-volatile storage medium and an internal memory. The non-volatile storage medium stores an operating system, a computer program, and a database. The internal memory provides an environment for the operation of the operating system and the computer program stored in the non-volatile storage medium. The network interface of the computer device is configured for communicating with an external terminal through a network connection. The computer program, when executed by the processor, causes the processor to perform the power scheduling method for a charging pile system.

Those skilled in the art may understand that the schematic diagram of the structure shown in FIG. 14 are merely block diagrams of the structure related to the solutions of present disclosure, and do not limit the computer device to which the solutions of the present disclosure is applied. The specific computer device may include more or fewer components than those shown in FIG. 14, or may combine some components, or may have different component arrangements.

In an embodiment, a computer device is provided. The computer device includes a memory and a processor. The memory stores a computer program. The processor is configured, when executing the computer program, to perform the method described in the above embodiments.

In an embodiment, a computer-readable storage medium is provided. The computer-readable storage medium stores a computer program. The computer program, when executed by a processor, causes the processor to perform the method described in the above embodiments.

In an embodiment, a computer program product is provided. The computer program product includes a computer program. The computer program, when executed by a processor, causes the processor to perform the method described in the above embodiments.

It should be understood by those skilled in the art that all or a part of processes of the method described in the above embodiments may be implemented by hardware executing a computer program. The computer program may be stored in a non-volatile computer-readable storage medium. The computer program, when being executed, may include processes of the method described in the above embodiments. The memory, storage, database, or other medium referenced in the embodiments of the present disclosure may include at least one of a non-volatile memory and a volatile memory. The non-volatile memory may include a Read-Only Memory (ROM), a magnetic tape, a floppy disk, a flash memory, an optical memory, or the like. The volatile memory may include a Random Access Memory (RAM) or an external cache memory. As an illustration and not a limitation, the RAM may have various forms, such as a Static Random Access Memory (SRAM) or a Dynamic Random Access Memory (DRAM).

In the description of this specification, the reference terms "some embodiments", "other embodiments", "ideal embodiments" or the like indicates that specific features, structures, materials or characteristics described in conjunction with the embodiments or examples are included in at least one embodiment or example of the present disclosure. In the present specification, the schematic descriptions of the above terms may not necessarily refer to the same embodiments or examples.

The technical features described in the above embodiments may be combined in any manner. To make the description concise, not all possible combinations of the technical features are described in the above embodiments. A combination of the technical features, as long as there is no contradiction therein, shall be considered within the scope of the present specification.

The above-described embodiments only show a few implementations of the present disclosure, and the description thereof is relatively specific and detailed and should not be understood as limiting the scope of the patent of invention. It should be noted that, for those skilled in the art, many improvements and modifications may be made to the present disclosure without departing from the concept of the present disclosure, and these improvements and modifications also fall within the protection scope of the present disclosure. Therefore, the protection scope of the present disclosure shall be determined based on the scope of the claims.

## Claims

1. A power scheduling method for a charging pile system, wherein the charging pile system comprises a plurality of charging guns and a plurality of power module groups, and the plurality of charging guns are connected to the plurality of power module groups in a one-to-one correspondence, wherein the method is **characterized in**:
turning on a switch between a first charging gun and a target power module group in a case that the first charging gun is connected to a load, wherein the target power module group corresponds to a target charging gun different from the first charging gun, and the target charging gun operates in an idle state; and
controlling at least one of the plurality of target power module groups to provide a charging power to the first charging gun in a case that a required charging power of the first charging gun is greater than an output power of a first power module group.

2. The power scheduling method for a charging pile system according to claim 1, wherein after turning on the switch between the first charging gun and the target power module group, the method further comprises:
controlling at least one of the plurality of target power module groups to operate in a pre-start state, wherein an output voltage of the target power module group operating in the pre-start state is less than a bus voltage.

3. The power scheduling method for the charging pile system according to claim 2, wherein each of the power module groups comprises a plurality of power modules, and the controlling at least one of the plurality of target power module groups to operate in a pre-start state comprises:
controlling at least one power module in the at least one of the plurality of target power module groups to operate in the pre-start state in a case that a required charging power of the load in a next time period is greater than a required charging power of the load in a current time period, wherein an output voltage of the power module operating in the pre-start state is less than the bus voltage.

4. The power scheduling method for a charging pile system according to claim 3, further comprising:
acquiring historical charging data and a current charging duration of the load connected to the first charging gun; and
predicting the required charging power of the load in the next time period based on the historical charging data and the current charging duration of the load.

5. The power scheduling method for a charging pile system according to claim 3, wherein the controlling at least one power module in the at least one of the plurality of target power module groups to operate in the pre-start state in a case that a required charging power of the load in a next time period is greater than a required charging power of the load in a current time period comprises:
determining a first power difference based on the required charging power of the load in the next time period and a total charging power currently provided to the first charging gun;
acquiring information of a first target power module based on the first power difference; and
controlling the first target power module to operate in the pre-start state.

6. The power scheduling method for a charging pile system according to claim 5, wherein the acquiring information of a first target power module based on the first power difference comprises:
acquiring operating durations of all power modules in the at least one of the plurality of target power module groups; and
determining the first target power module from the at least one of the plurality of target power module groups based on the operating durations of all the power modules.

7. The power scheduling method for a charging pile system according to claim 2, wherein the controlling at least one of the plurality of target power module groups to provide a charging power to the first charging gun in a case that a required charging power of the first charging gun is greater than an output power of a first power module group comprises:
regulating an output voltage and an output current of the at least one of the plurality of target power module groups that operates in the pre-start state in the case that the required charging power of the first charging gun is greater than the output power of the first power module group, whereby the at least one of the plurality of target power module groups that operates in the pre-start state provides the charging power to the first charging gun.

8. The power scheduling method for a charging pile system according to claim 1, wherein after turning on the switch between the first charging gun and the target power module group, the method further comprises:
disconnecting the target power module group and the first charging gun in a case that the target charging gun corresponding to the target power module group is started up.

9. A charging pile system, **characterized in**:
a plurality of charging guns and a plurality of power module groups, wherein the plurality of charging guns and the plurality of power module groups are connected one-to-one;
a switch device, connected to the plurality of charging guns and the plurality of power module groups, and configured to connect any one of the plurality of charging guns and any one of the plurality of power module groups; and
a controller, respectively connected to the plurality of charging guns, the plurality of power module groups and the switch device, and configured to: turn on a switch between a first charging gun and a target power module group in a case that the first charging gun is connected to a load, wherein the target power module group corresponds to a target charging gun different from the first charging gun, and the target charging gun operates in an idle state; and control at least one of the plurality of target power module groups to provide a charging power to the first charging gun in a case that a required charging power of the first charging gun is greater than an output power of a first power module group.

10. A power scheduling apparatus for a charging pile system, **characterized in**:
a control module, configured to: turn on a switch between a first charging gun and a target power module group in a case that the first charging gun is connected to a load, wherein the target power module group corresponds to a target charging gun different from the first charging gun, and the target charging gun operates in an idle state; and control at least one of the plurality of target power module groups to provide a charging power to the first charging gun in a case that a required charging power of the first charging gun is greater than an output power of a first power module group.

11. The power scheduling apparatus for a charging pile system according to claim 10, further comprising:
a regulation module, configured for controlling at least one of the plurality of target power module groups to operate in a pre-start state, wherein an output voltage of the target power module group operating in the pre-start state is less than a bus voltage.

12. The power scheduling apparatus for a charging pile system according to claim 11, wherein each of the power module groups comprises a plurality of power modules, and the regulation module comprises:
a determination unit, configured for determining a required charging power of the load connected to the first charging gun in a next time period; and
a switching unit, configured to control at least one power module in the at least one of the plurality of target power module groups to operate in the pre-start state in a case that the required charging power of the load in the next time period is greater than a required charging power of the load in a current time period, wherein an output voltage of the power module operating in the pre-start state is less than the bus voltage.

13. The power scheduling apparatus for a charging pile system according to claim 12, wherein the determination unit comprises:
an acquisition subunit, configured for acquiring historical charging data and a current charging duration of the load connected to the first charging gun; and
a prediction subunit, configured for predicting the required charging power of the load in the next time period based on the historical charging data and the current charging duration of the load.

14. The power scheduling apparatus for a charging pile system according to claim 12, wherein the switching unit comprises:
a determination subunit, configured for determining a first power difference based on the required charging power of the load in the next time period and a total charging power currently provided to the first charging gun, and configured for acquiring information of a first target power module based on the first power difference; and
a switching subunit, configured for controlling the first target power module to operate in the pre-start state.

15. The power scheduling apparatus for a charging pile system according to claim 14, wherein the determination subunit is configured for: acquiring operating durations of all power modules in the at least one of the plurality of target power module groups; and determining the first target power module from the at least one of the plurality of target power module groups based on the operating durations of all the power modules.

16. The power scheduling apparatus for a charging pile system according to claim 11, wherein the regulation module is configured for regulating an output voltage and an output current of the at least one of the plurality of target power module groups that operates in the pre-start state in the case that the required charging power of the first charging gun is greater than the output power of the first power module group, whereby the at least one of the plurality of target power module groups that operates in the pre-start state provides the charging power to the first charging gun.

17. The power scheduling apparatus for a charging pile system according to claim 10, wherein the control module is configured to disconnect the target power module group and the first charging gun in a case that the target charging gun corresponding to the target power module group is started up.

18. A computer device, **characterized in**:
a memory, storing a computer program; and
a processor, wherein
the processor is configured, when executing the computer program, to perform the method according to any one of claims 1 to 8.

19. A computer-readable storage medium, storing a computer program, and **characterized in that**
the computer program, when executed by a processor, causes the processor to perform the method according to any one of claims 1 to 8.
